# EUROPÄISCHE PATENTSCHRIFT

(11) **EP 3 049 289 B1**
(45) Veröffentlichungstag und Bekanntmachung des Hinweises auf die Patenterteilung: **15.11.2017**
(21) Anmeldenummer: 14761877.1
(22) Anmeldetag: 11.09.2014
(51) Int. Cl.: B60R 16/023, B60R 16/03, G05B 19/414, E05B 81/54, B62D 47/02, B60J 7/06

(54) **INTEGRIERTES UND KOMBINIERTES TÜRBETRIEBSSYSTEM FÜR NUTZFAHRZEUGE**
INTEGRATED AND COMBINED DOOR-OPERATING SYSTEM FOR COMMERCIAL VEHICLES
SYSTÈME D'EXPLOITATION INTÉGRÉ ET COMBINÉ DE PORTES DE VÉHICULES UTILITAIRES

(30) Priorität: 23.09.2013 DE 102013110462
(43) Veröffentlichungstag der Anmeldung: 03.08.2016
(73) Patentinhaber: KNORR-BREMSE Systeme für Nutzfahrzeuge GmbH, 80809 München (DE)
(72) Erfinder: FOJTYIK, Gabor, H-2310 Szigetszentmiklos (HU); CSONTOS, Peter, H-6750 Algyö (HU); HORVATH, Csaba, H-2051 Biatorbagy (HU); SZELL, Peter, H-1163 Budapest (HU); DRIENYOVSZKI, Sandor, H-1042 Budapest (HU)
(86) Internationale Anmeldenummer: PCT/EP2014/069371
(87) Internationale Veröffentlichungsnummer: WO 2015/039947

(56) Entgegenhaltungen:
- EP-A1- 2 404 805
- WO-A1-00/38953
- WO-A1-2004/089696
- WO-A1-2008/062512
- CN-U- 202 400 038
- DE-A1- 10 212 329
- DE-A1- 10 353 421
- DE-A1-102004 036 046
- DE-C1- 19 934 880
- US-A- 5 544 054

## Beschreibung

Die Erfindung betrifft ein Türbetriebssystem für Nutzfahrzeuge, und bezieht sich insbesondere auf ein Türbetriebssystem bzw. ein Türbetätigungssystem für elektronisch gesteuerte Türsysteme zur Steuerung der Funktionen von und für Einstiegs- und Ausstiegstüren in Nutzfahrzeugen, beispielsweise Bussen und allgemein solchen für den Personentransport, gemäß dem Oberbegriff von Anspruch 1.

Ein solches Türbetriebssystem wird in DE 102 12 329 A1 beschrieben.

Aufgrund der weiterhin zunehmenden Zahl von elektronisch zu steuernden Einrichtungen und/oder Funktionen in Nutzfahrzeugen und damit verbunden einer immer größer werdenden Zahl erforderlicher elektronischer Steuergeräte steigen der Aufwand zur Verkabelung bzw. Vernetzung der elektronischen Steuergeräte sowie ein über ein zur Vernetzung verwendetes Bussystem zu übertragendes Datenaufkommen mit zunehmender Systemkomplexität beträchtlich an.

Beispielsweise werden alle Funktionen eines Türbetriebs- oder Türbetätigungssystems in eine elektronische Fahrzeug-Multiplex-Steuereinheit integriert und durch diese bereitgestellt. Von der elektronischen Fahrzeug-Multiplex-Steuereinheit führen Daten und/oder Kommunikationsleitungen, in Form beispielsweise eines Bussystems wie etwa CAN, zu weiteren dedizierten Türsteuereinrichtungen und/oder Türstellgliedern.

Weiter beispielsweise ist in einem modularen Türsteuerungssystem für Nutzfahrzeuge jeder Tür ein dediziertes Türsteuergerät zugeordnet. Das zugrundeliegende System besteht aus zueinander identischen Türsteuergeräten, von denen jeweils eines für jede Tür des Nutzfahrzeugs bereitzustellen ist. Der Anschluss dieses Türsteuerungssystems an das Nutzfahrzeug hat an der ersten Tür des Nutzfahrzeugs zu erfolgen. Außerdem sind die Parameter aller Türen des Nutzfahrzeugs nur in dem Türsteuergerät der ersten Tür abgelegt. Ein solches modulares Steuerungssystem beinhaltet somit ein Haupttürsteuergerät, das mit dem weiteren Nutzfahrzeug verbunden ist, an der ersten Tür, und eine Anzahl von von diesem abhängigen Nebentürsteuergeräten, die über einen dedizierten Türsteuerungs-Systembus mit dem Hauptsteuergerät verbunden sind, selbst aber keine eigene Verbindung zu dem weiteren Nutzfahrzeug haben.

Dieses System kann dadurch zwar entsprechend der Anzahl von Türen skaliert werden, muss jedoch über ein zur Integration aller Funktionen und zur Anbindung und Kommunikation mit dem weiteren Fahrzeug ausreichend leistungsfähiges Haupttürsteuergerät verfügen. Weil die einzelnen Türsteuergeräte aber zueinander identisch sind und die Leistungsfähigkeit und die Möglichkeiten des Haupttürsteuergeräts in den Nebensteuergeräten nicht in vollem Umfang benötigt werden, liegt in den Nebensteuergeräten ein Teil dieser Leistungsfähigkeit und ein Teil dieser Möglichkeiten ungenutzt brach, obwohl nach wie vor für jede Tür ein dediziertes Türsteuergerät und die entsprechende Verkabelung vorzusehen sind, und auch die entsprechenden Kosten anfallen.

Wie dieses Beispiel zeigt, ist es insbesondere bedingt durch die Art zu steuernder Teilsysteme in einem Nutzfahrzeug, deren Anforderungen unterschiedlich groß sein können, in der Regel nicht möglich, für jeden zu steuernden Anwendungsfall ein exakt ausgelegtes, dediziertes elektronisches Steuergerät bereitzustellen, sondern werden Baugruppen oder Module eingesetzt, deren Kapazität oder freies Hardware-Potenzial bezüglich beispielsweise Rechenleistung und/oder Anzahl der Eingabe/Ausgabe-Anschlüsse in einem funktionierenden Gesamtsystem nur teilweise genutzt wird. Trotzdem müssen für das Gesamtsystem entsprechende Steuergeräte bereitgestellt werden, so dass die Komplexität des Gesamtsystems, der Verkabelungsaufwand und damit verbunden auch die Kosten hoch bleiben.

Besonders ist dies bei etwa Türsystemen der Fall, da Türen in Nutzfahrzeugen nicht an beliebiger Stelle angeordnet werden können, und somit entweder dedizierte Türsteuergeräte mit zusätzlich eigener Verkabelung in das Gesamtsystem vorzusehen sind, oder ein entfernt angeordnetes Steuergerät mit entsprechend zusätzlicher Komplexität und Rechenleistung und/oder zusätzlichen Anschlüssen bereitzustellen ist.

Der Erfindung liegt daher als eine Aufgabe zugrunde, ein integriertes und kombiniertes Türbetriebssystem für Nutzfahrzeuge zu schaffen, welches freies Hardware-Potenzial im zugrunde liegenden Gesamtsystem nutzt, die Komplexität einer zentralen Steuereinheit des Fahrzeugs verringert, und darüber hinaus eine weniger aufwendige Verkabelung innerhalb des Gesamtsystems erlaubt.

Erfindungsgemäß wird diese Aufgabe gelöst durch ein integriertes und kombiniertes Türbetriebssystem mit den Merkmalen des Patentanspruchs 1. Vorteilhafte Weiterbildungen der Erfindung sind Gegenstand der beigefügten Unteransprüche.

Nach einer Grundidee der Erfindung werden Eingangssignale und/oder Ausgangssignale der Türbetriebssteuerung oder Türbestätigungssteuerung eines Nutzfahrzeugs für den Personentransport mit Einstiegstüren und/oder Ausstiegstüren, wie beispielsweise solchen eines Stadtbusses oder Reisebusses gesammelt und von einer zentralen elektronischen Multiplex-Steuereinheit des Fahrzeugs ausgegeben. Solche Signale beinhalten beispielsweise ein Ausstiegssignal, ein Notsignal, ein Blinkmeldesignal, und ein Summersignal.

Darüber hinaus werden Eingangssignale und/oder Ausgangssignale der direkten Türbetriebssteuerung oder Türbetätigungssteuerung, wie beispielsweise Anweisungs-, Zustands- und/oder Rückmeldesignale für etwa Tür öffnen, Tür schließen, Tür offen, Tür geschlossen, Notöffnungszustand, Zustand des Fahrzeugs angehalten, geparkt oder fahrend und dergleichen, von zumindest einer anderen elektronischen Steuereinheit des Fahrzeugs gesammelt und ausgegeben, welche zwar für andere Fahrzeugfunktionen dediziert bzw. vorgesehen ist, welche aber freie und/oder dedizierte Kapazität aufweist und dadurch als beispielsweise Eingangs-/Ausgangs-Anschlusserweiterung für das Türbetriebssystem bzw. Türbetätigungssystem zur Verfügung steht, und in welcher Steuerungsroutinen bzw. Programmabläufe der integrierten Türsteuerung ausgeführt werden.

Nach dieser Grundidee wird somit die Türbetriebssteuerung mit zumindest einem anderen elektronischen System des Nutzfahrzeugs kombiniert und/oder in dieses integriert, soweit dessen Steuereinheit aus Hardwaregesichtspunkten über freie und/oder dedizierte Kapazität verfügt. In anderen Worten werden zur Steuerung einer Tür und/oder deren Unter- bzw. Nebensysteme keine dedizierten Steuergeräte verwendet.

Vorteile dieser Systemintegration bestehen insbesondere darin, dass freies Hardware-Potenzial anderer, bereits vorhandener Steuereinheiten genutzt wird, und die Komplexität einer zentralen Steuereinheit des Fahrzeugs, beispielsweise der Fahrzeugmultiplex des Busses, verringert wird. Aber auch in einer Reduktion der Verkabelung des Türbetriebssystems durch Verwenden des beispielsweise CAN-Netzes des Fahrzeugs und durch Verwenden zumindest einer elektronischen Steuereinheit zumindest eines anderen Fahrzeugsteuerungssystems, vorzugsweise derjenigen bzw. desjenigen, die sich am nächsten zu der zu steuernden Tür befindet.

Erfindungsgemäß wird somit ein integriertes und kombiniertes Türbetriebssystem für ein Nutzfahrzeug vorgeschlagen, mit zumindest einer zentralen elektronischen Steuereinheit innerhalb eines Gesamtsystems des Nutzfahrzeugs, die einen ersten Teil von Funktionen einer Türbetriebssteuerung des Türbetriebssystems bereitstellt und verarbeitet; und zumindest einer weiteren elektronischen Steuereinheit in einem weiteren Systemteil des Gesamtsystems, wobei der weitere Systemteil für die Steuerung anderer Funktionen als denen des Türbetriebssystems zuständig ist, die zumindest eine weitere elektronische Steuereinheit sich von der zumindest einen zentralen elektronischen Steuereinheit unterscheidet, und die zumindest eine weitere elektronische Steuereinheit zusätzlich zu den anderen Funktionen des weiteren Systemteils in bezüglich Leistungsfähigkeit und/oder Anzahl von Anschlüssen freien Kapazitäten, die nicht von den anderen Funktionen belegt sind, einen zweiten Teil von Funktionen der Türbetriebssteuerung des Türbetriebssystems bereitstellt und verarbeitet; wobei Steuer-Eingangssignale und Steuer-Ausgangssignale betreffend den ersten Teil von Funktionen des Türbetriebssystems von der zumindest einen zentralen elektronischen Steuereinheit über eine Multiplex-Busverbindung aus Richtung zumindest einer Tür des Nutzfahrzeugs kommend entgegengenommen und/oder in Richtung zumindest einer Tür des Nutzfahrzeugs gehend ausgegeben werden; und Steuer-Eingangssignale und Steuer-Ausgangssignale betreffend den zweiten Teil von Funktionen von der zumindest einen weiteren elektronischen Steuereinheit aus Richtung zumindest einer Tür des Nutzfahrzeugs kommend direkt entgegengenommen und/oder in Richtung zumindest einer Tür des Nutzfahrzeugs gehend direkt ausgegeben werden.

In bevorzugten Ausführungsformen ist der zumindest eine weitere Systemteil ein elektronisches Bremssystem oder ein Teilsystem desselben, oder eine elektronische Fahrwerksregelung, Radaufhängungsregelung, Niveauregelung oder Dämpferregelung, und ist vorteilhaft die Multiplex-Busverbindung ein CAN-Bus.

In einer weiter bevorzugten Ausführungsform weist der zumindest eine weitere Systemteil eine elektronische Steuereinheit und Grundfunktionen des Türbetriebs und/oder der Türbetätigung für drei Türen des Nutzfahrzeugs auf.

Dabei auch bevorzugt wird, dass Grundfunktionen für die Türbetätigung in die Steuerung einer elektronischen Fahrwerksregelung, Radaufhängungsregelung, Niveauregelung oder Dämpferregelung als dem weiteren Systemteil integriert sind, genau eine elektronische Steuereinheit für die elektronische Fahrwerksregelung, Radaufhängungsregelung, Niveauregelung oder Dämpferregelung und die Grundfunktionen des Türbetriebs bzw. der Türbetätigung vorgesehen ist, und die zentrale elektronische Steuereinheit dazu angeordnet ist, diejenigen Funktionen des Türbetriebssystems bereitzustellen, welche nicht in die elektronische Steuereinheit der elektronischen Fahrwerksregelung, Radaufhängungsregelung, Niveauregelung oder Dämpferregelung integriert sind.

In einer weiter bevorzugten, alternativen Ausführungsform weist der zumindest eine weitere Systemteil eine elektronische Steuereinheit und Grundfunktionen des Türbetriebs und/oder der Türbetätigung für zwei Türen des Nutzfahrzeugs auf.

Dabei auch bevorzugt wird, dass Grundfunktionen für die Türbetätigung in die Steuerung einer elektronischen Fahrwerksregelung, Radaufhängungsregelung, Niveauregelung oder Dämpferregelung als dem weiteren Systemteil integriert sind, genau eine elektronische Steuereinheit für die elektronische Fahrwerksregelung, Radaufhängungsregelung, Niveauregelung oder Dämpferregelung und die Grundfunktionen des Türbetriebs bzw. der Türbetätigung vorgesehen ist, und die zentrale elektronische Steuereinheit dazu angeordnet ist, diejenigen Funktionen des Türbetriebssystems bereitzustellen, welche nicht in die Steuerung der elektronischen Fahrwerksregelung, Radaufhängungsregelung, Niveauregelung oder Dämpferregelung integriert sind, wobei die zentrale elektronische Steuereinheit und die genau eine elektronische Steuereinheit derart miteinander verbunden sind, dass Funktionen einer Steuereinheit durch die jeweils andere Steuereinheit durchleitbar und an freien Anschlüssen der jeweils anderen Steuereinheit bereitstellbar sind.

In einer weiter bevorzugten, alternativen Ausführungsform beinhaltet der zumindest eine weitere Systemteil zumindest zwei elektronische Steuereinheiten.

Dabei auch bevorzugt wird, dass alle Funktionen für die Türbetätigung in die Steuerung der elektronischen Fahrwerksregelung, Radaufhängungsregelung, Niveauregelung oder Dämpferregelung als dem weiteren Systemteil integriert sind, das Nutzfahrzeug drei Türen aufweist, eine elektronische Steuereinheit für zwei der drei Türen vorgesehen ist und eine elektronische Steuereinheit für die dritte der drei Türen vorgesehen ist, und die zentrale elektronische Steuereinheit dazu angeordnet ist, diejenigen Funktionen des Türbetriebssystems bereitzustellen, welche nicht in die zumindest zwei elektronischen Steuereinheiten der elektronischen Fahrwerksregelung, Radaufhängungsregelung, Niveauregelung oder Dämpferregelung integriert sind.

Dabei außerdem bevorzugt wird, dass alle Funktionen für die Türbetätigung in die Steuerung der elektronischen Fahrwerksregelung, Radaufhängungsregelung, Niveauregelung oder Dämpferregelung als dem weiteren Systemteil integriert sind, das Nutzfahrzeug drei Türen aufweist und genau zwei elektronische Steuereinheiten verteilt für die drei Türen vorgesehen sind, und die zentrale elektronische Steuereinheit dazu angeordnet ist, diejenigen Funktionen des Türbetriebssystems bereitzustellen, welche nicht in die genau zwei elektronischen Steuereinheiten der elektronischen Fahrwerksregelung, Radaufhängungsregelung, Niveauregelung oder Dämpferregelung integriert sind.

In einer weiter bevorzugten, alternativen Ausführungsform beinhaltet der zumindest eine weitere Systemteil eine erste elektronische Steuereinheit, die als eine Hauptsteuereinheit ausgelegt und einer Einstiegstür des Nutzfahrzeugs zugeordnet ist, und zumindest eine von der ersten elektronischen Steuereinheit abhängige zweite elektronische Steuereinheit, die als eine Nebensteuereinheit ausgelegt und einer Ausstiegstür des Nutzfahrzeugs zugeordnet ist.

Dabei auch bevorzugt wird, dass alle Funktionen für die Türbetätigung in die Steuerung der elektronischen Fahrwerksregelung, Radaufhängungsregelung, Niveauregelung oder Dämpferregelung als dem weiteren Systemteil integriert sind, genau eine erste elektronische Steuereinheit die Hauptsteuereinheit bildet und für die elektronische Fahrwerksregelung, Radaufhängungsregelung, Niveauregelung oder Dämpferregelung und/oder den Türbetrieb vorgesehen ist, und jeder von Ausstiegstüren des Nutzfahrzeugs genau eine zweite elektronische Steuereinheit als von der Hauptsteuereinheit abhängige Nebensteuereinheit zugeordnet ist.

Außerdem bevorzugt wird, dass der zumindest eine weitere Systemteil eine erste elektronische Steuereinheit, die als eine Hauptsteuereinheit ausgelegt und einer Einstiegstür des Nutzfahrzeugs zugeordnet ist, und zumindest eine von der ersten elektronischen Steuereinheit abhängige zweite elektronische Steuereinheit, die als eine Nebensteuereinheit ausgelegt und einer Ausstiegstür des Nutzfahrzeugs zugeordnet ist, und ein Türsteuerventil mit darin integrierten Türsteuerungsfunktionen beinhaltet.

Vorteilhaft ist es, wenn die Steuer-Eingangssignale und die Steuer-Ausgangssignale betreffend den ersten Teil von Funktionen der Türbetriebssteuerung Signale für ein Aussteigeindikatorsignal, ein Notsignal, eine Blinkindikatorleuchte und/oder einen Summer beinhalten.

Außerdem vorteilhaft ist es, wenn die Steuer-Eingangssignale und die Steuer-Ausgangssignale betreffend den zweiten Teil von Funktionen der Türbetriebssteuerung Meldesignale und/oder Zustandssignale für die Geöffnet-Stellung einer Tür, die Geschlossen-Stellung einer Tür, eine Notöffnung einer Tür, eines Angehalten-Zustands des Nutzfahrzeugs, eines Geparkt-Zustands des Nutzfahrzeugs, und/oder eines Fahrzustands des Nutzfahrzeugs beinhalten.

Je nach verfügbarer Hardware und einer darauf entfallenden Verteilung von Funktionen erweist es sich als ebenfalls vorteilhaft, dass zumindest eine elektronische Steuereinheit des weiteren Systemteils für eine Kommunikation mit der zentralen elektronischen Steuereinheit verbunden ist und eine Ausgabe-/Eingabe-Anschlusserweiterung für die zentrale elektronische Steuereinheit bildet.

Bevorzugt kann unter anderem sein, dass die erste elektronische Steuereinheit, die als die Hauptsteuereinheit ausgelegt ist, und die zumindest eine zweite elektronische Steuereinheit, die als eine Nebensteuereinheit ausgelegt ist, für eine Kommunikation mit der zentralen elektronischen Steuereinheit verbunden sind und jeweils eine Ausgabe-/Eingabe-Anschlusserweiterung für die zentrale elektronische Steuereinheit bilden.

In einer weiter bevorzugten Ausführungsform beinhaltet das integrierte und kombinierte Türbetriebssystem zusätzlich ein Fahrgastüberwachungssystem und/oder ein Fahrgastzählsystem.

In diesem Fall kann das Fahrgastüberwachungssystem derart an eine mobile Anwendung gekoppelt sein, dass ein mobiles Kommunikationsgerät eines Fahrgasts Orts- und/oder Nachverfolgungsinformation über die Position des Nutzfahrzeugs erfasst und an eine zentrale Datenverarbeitungseinrichtung übermittelt und/oder solche, von einem Mobilgerät eines anderen Fahrgasts bereitgestellte, Information von der zentralen Datenverarbeitungseinrichtung empfängt.

Außerdem kann das Fahrgastüberwachungssystem in sich integriert ein elektronisches Fahrscheinsystem beinhalten, das zur Bezahlung von Fahrscheinen an eine mobile Anwendung auf einem mobilen Kommunikationsgerät eines Fahrgasts gekoppelt ist.

Wesentliche Vorteile der vorstehenden Systemintegration ergeben sich aus der Nutzung freien Potenzials der eingesetzten Systemkomponenten und anderer (elektronischer) Steuereinheiten (die zwar auch anderen Betriebsfunktionen des Nutzfahrzeugs zugeordnet sind, jedoch dadurch nicht ausgelastet werden und/oder über freie, noch unbelegte Eingangs- und/oder Ausgangsanschlüsse verfügen), und bestehen darüber hinaus in einer Verringerung der erforderlichen Komplexität der zentralen elektronischen Steuereinheit des Fahrzeugs (beispielsweise des Fahrzeug-Multiplex eines Busses). Außerdem resultieren wesentliche Vorteile aus der Verringerung des Verkabelungsaufwands des Türbetriebs- und/oder Türbetätigungssystems durch Nutzen des CAN-Netzwerks des Fahrzeugs und durch Nutzen der elektronischen Steuereinheit(en) zumindest eines anderen Steuerungssystems des Fahrzeugs, welche(s) sich am Nächsten zu einer jeweils zu steuernden Tür liegend befindet.

Die Erfindung wird nachstehend anhand von Ausführungsbeispielen unter Bezugnahme auf die beigefügte Zeichnung näher beschrieben. Es zeigen:
Fig. 1 stark vereinfacht und ausschnittsweise ein integriertes und kombiniertes Türbetriebssystem für ein Nutzfahrzeug mit drei Türen gemäß einem ersten Ausführungsbeispiel;
Fig. 2 stark vereinfacht und ausschnittsweise ein integriertes und kombiniertes Türbetriebssystem für ein Nutzfahrzeug mit zwei Türen gemäß einem zweiten Ausführungsbeispiel;
Fig. 3 stark vereinfacht und ausschnittsweise ein integriertes und kombiniertes Türbetriebssystem für ein Nutzfahrzeug mit drei Türen gemäß einem dritten Ausführungsbeispiel;
Fig. 4 stark vereinfacht und ausschnittsweise ein integriertes und kombiniertes Türbetriebssystem für ein Nutzfahrzeug mit drei Türen gemäß einem vierten Ausführungsbeispiel;
Fig. 5A und 5B jeweils eine Tabelle mit einer Auswahl von Funktionen, die für den Betrieb einer Eingangstür respektive einer Ausgangstür in einem Nutzfahrzeug für den Personentransport, beispielsweise einem Omnibus, verwendet werden können; und
Fig. 6 eine Tabelle 3, welche für das erste Ausführungsbeispiel (Spalte AB1 in den Tabellen 1 und 2 in Fig. 5A und 5B) die benötigten Anzahlen von Eingangsanschlüssen bzw. Eingangspins und Ausgangsanschlüssen bzw. Ausgangspins zeigt.

Es wird angemerkt, dass in den Ausführungsbeispielen und Modifikationen gleichartig wirkende und/oder identisch vorhandene Einrichtungen, Mittel und/oder Komponenten gegebenenfalls zweckmäßig nicht wiederholt beschrieben werden und/oder mit identischen Bezugszeichen bezeichnet sein können. Eine Beschränkung der Erfindung ergibt sich hieraus nicht.

Das Nutzfahrzeug wird nachstehend auch allgemein als Fahrzeug bezeichnet. Obwohl die Erfindung am Beispiel eines Nutzfahrzeugs für den Personentransport mit zumindest einer Einstiegstür und/oder einer Ausstiegstür beschrieben wird, ist die Erfindung nicht hierauf beschränkt, sondern dem Grunde nach auch auf Fahrzeuge allgemeiner Art mit zumindest einer zu steuernden bzw. zu betätigenden Fahrzeugeingangseinrichtung und/oder Fahrzeugausgangseinrichtung anwendbar. Denkbar sind etwa für den Bodentransport, den Lufttransport und/oder den Transport auf Wasserwegen bestimmte Fahrzeuge mit Be- und/oder Entladeöffnungen für Güter und/oder Personen und geeigneten Einrichtungen, die solche Öffnungen freigeben und/oder verschließen.

Den einzelnen Ausführungsbeispielen eines Türbetriebssystems bzw. Türbetätigungssystems gemeinsam ist jeweils eine elektronische Fahrzeug-Multiplex-Steuereinheit (ECU) an sich bekannter Art, die beispielsweise als Steuergerät ausgelegt und als eine zentrale elektronische Steuereinheit des Fahrzeugs ausgebildet sein kann und über zumindest eine Schnittstelle und/oder zumindest einen Busanschluss zur Datenkommunikation, Signalisierung und/oder Verbindung mit weiteren elektronischen Steuereinheiten und/oder Systemteilen bzw. Komponenten, die sich intern in dem Fahrzeug oder extern außerhalb des Fahrzeugs befinden können, zumindest einen Eingang und/oder Ausgang für Daten und/oder Signale, einen internen Aufbau mit zumindest einer Speichereinrichtung, zumindest einer Recheneinheit bzw. zumindest einem Prozessor sowie entsprechender Peripherie zur Verarbeitung von Ablaufroutinen beispielsweise einer Systemsteuerungssoftware, einer Spannungsversorgung und/oder dergleichen verfügen kann. Die elektronische Fahrzeug-Multiplex-Steuereinheit ist fahrzeugspezifisch geeignet ausgelegt und stellt im Rahmen eines jeweiligen Fahrzeugkonzepts und/oder gegebenenfalls geltender Regelungen und Vorschriften auch Funktionen des Türbetriebssystems bereit.

Weiter sind den einzelnen Ausführungsbeispielen zumindest zwei zu steuernde oder betätigende Türen 4, 6 (2 Türen) bzw. 4, 6 und 8 (3 Türen) des Fahrzeugs gemeinsam. In der Regel sind die Türen an vorbestimmten Stellen und entfernt voneinander in dem Fahrzeug angeordnet, für den Personentransport beispielsweise entlang des Fahrzeugaufbaus als eine vordere Tür, eine mittlere Tür und/oder eine hintere Tür. Die Funktion der einzelnen Türen ist vorbestimmbar, nicht jedoch eingeschränkt, so dass jede Tür als Einstiegstür, als Ausstiegstür, oder als Einstiegs- und Ausstiegstür konfiguriert sein kann. Eine Beschränkung auf zwei oder drei Türen besteht ebenfalls nicht. Je nach Fahrzeug und Systemauslegung sind auch mehr als drei Türen vorsehbar.

Unter einem weiteren Teilsystem bzw. Systemteil des Fahrzeugs ist hierin eine Anordnung von Fahrzeugsteuerungskomponenten mit/und entsprechenden Verbindungen zu verstehen, die separat von der elektronischen Fahrzeug-Multiplex-Steuereinheit in dem Fahrzeug vorgesehen und angeordnet sind, und die bereits anderweitig, d.h. nicht bzw. zumindest nicht von vorneherein mit der Türsteuerung bzw. der Türbetätigung und/oder dem Türbetrieb in Zusammenhang stehende Fahrzeugfunktionen ausführen und/oder steuern, jedoch für abzubildende Funktionen der Türsteuerung bzw. des Türbetriebs freie Hardwarekapazität und/oder freie Anschlüsse derart aufweisen, dass zumindest ein Teil der Funktionen der Türsteuerung bzw. des Türbetriebs in dieses weitere Teilsystem hinein verlegbar ist und von diesem ausgeführt und/oder gesteuert werden kann.

In anderen Worten weist das weitere Teilsystem freie Hardware-Kapazität, Verbindungskapazität und/oder Anschlusskapazität bzw. solche Möglichkeiten derart auf, dass bisher von der elektronischen Fahrzeug-Multiplex-Steuereinheit übernommene Funktionen des Türbetriebssystems aus dieser auslagerbar und in das weitere Teilsystem verlagerbar sind und dann von diesem übernommen werden, und/oder zusätzliche Funktionen, beispielsweise hinzukommende oder erweiterte Funktionen, nicht in die (aufwendige) elektronische Fahrzeug-Multiplex-Steuereinheit, sondern in eine dazu geeignete Steuereinheit in dem weiteren Teilsystem integriert werden.

Das weitere Teilsystem des Fahrzeugs ist beispielsweise eine elektronische Fahrwerksregelung, Radaufhängungsregelung, Niveauregelung (ELC) oder Dämpferregelung, ein Antiblockiersystem (ABS), ein elektronisches Bremssystem (EBS) und/oder dergleichen. Eine Beschränkung hierauf besteht jedoch nicht. Es ist möglich, Funktionen des Türbetriebssystems in nur ein weiteres Teilsystem des Fahrzeugs zu integrieren, auf verteilte Komponenten, Module und/oder Strukturen des weiteren Teilsystems zu verteilen, oder auf mehrere weitere Teilsysteme gleicher oder verschiedener Bestimmung zu verteilen. Beispielsweise kann ein (erster) Teil der Funktionen des Türbetriebssystems von der elektronischen Fahrzeug-Multiplex-Steuereinheit und ein weiterer (zweiter) Teil der Funktionen des Türbetriebssystems von einer weiteren elektronischen Steuereinheit in der elektronischen Fahrwerksregelung, Radaufhängungsregelung, Niveauregelung (ELC) oder Dämpferregelung des Fahrzeugs, und/oder ein nochmals weiterer Teil der Funktionen des Türbetriebssystems von einer nochmals weiteren elektronischen Steuereinheit in dem Antiblockiersystem des Fahrzeugs übernommen, verarbeitet, gesteuert oder ausgeführt werden.

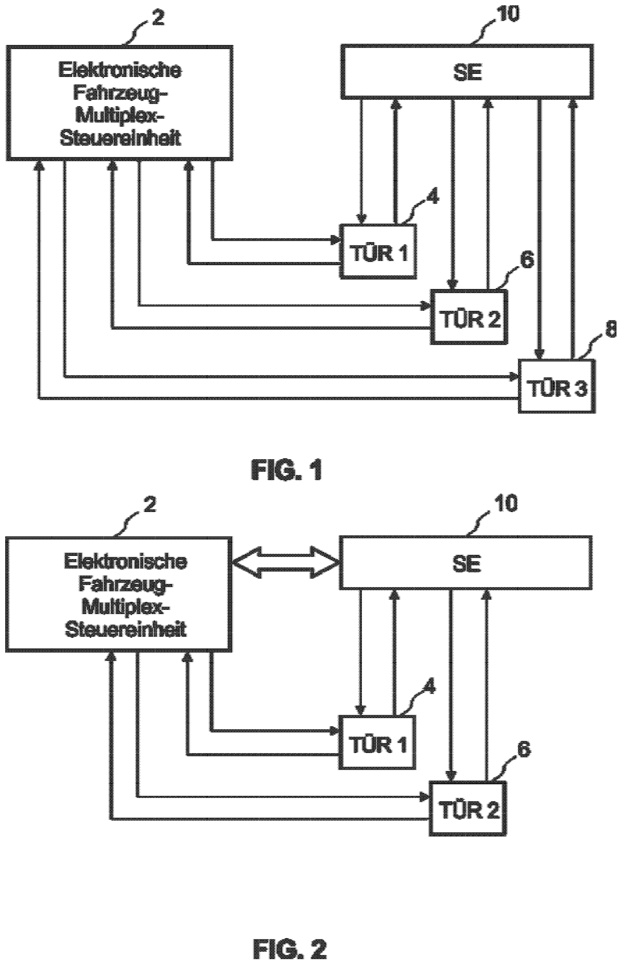

Fig. 1 zeigt stark vereinfacht und ausschnittsweise ein integriertes und kombiniertes Türbetriebssystem für ein Nutzfahrzeug mit drei Türen gemäß einem ersten Ausführungsbeispiel. Stark vereinfacht und ausschnittsweise dahingehend, dass nur eine elektronische Fahrzeug-Multiplex-Steuereinheit 2, eine erste Tür 4 (Tür 1), eine zweite Tür 6 (Tür2), eine dritte Tür 8 (Tür3), eine weitere elektronische Steuereinheit (SE) 10 eines weiteren Teilsystems des Fahrzeugs, und jeweils (durch Pfeile angedeutet) Verbindungen zwischen diesen für das hier beschriebene Türbetriebssystem relevanten Komponenten dargestellt sind, die übrige Fahrzeugumgebung aber weggelassen ist.

In dem ersten Ausführungsbeispiel sind Grundfunktionen für den Türbetrieb bzw. die Türbetätigung in nur eine weitere elektronische Steuereinheit 10 des weiteren Teilsystems des Fahrzeugs integriert, d.h. werden von dieser übernommen, verarbeitet und/oder ausgeführt. In anderen Worten ist in diesem Ausführungsbeispiel nur eine weitere elektronische Steuereinheit 10 des weiteren Teilsystems des Fahrzeugs vorgesehen. Diejenigen Funktionen des Türbetriebssystems, die nicht wie vorstehend beschrieben in die weitere elektronische Steuereinheit 10 integriert sind, werden von dem Fahrzeugmultiplex, d.h. der geeignet angebundenen elektronischen Fahrzeug-Multiplex-Steuereinheit 2 übernommen, verarbeitet und/oder ausgeführt.

Verbindungen zwischen den einzelnen Türen 4, 6 und 8, der elektronischen Fahrzeug-Multiplex-Steuereinheit 2 und/oder der weiteren elektronischen Steuereinheit 10 des weiteren Teilsystems sind dazu jeweils bidirektional wie in Fig. 1 gezeigt hergestellt.

Fig. 2 zeigt stark vereinfacht und ausschnittsweise ein integriertes und kombiniertes Türbetriebssystem für ein Nutzfahrzeug mit zwei Türen gemäß einem zweiten Ausführungsbeispiel. Stark vereinfacht und ausschnittsweise dahingehend, dass nur die elektronische Fahrzeug-Multiplex-Steuereinheit 2, die erste Tür 4, die zweite Tür 6, die weitere elektronische Steuereinheit (SE) 10 des weiteren Teilsystems des Fahrzeugs, und jeweils (durch Pfeile angedeutet) Verbindungen zwischen diesen für das hier beschriebene Türbetriebssystem relevanten Komponenten dargestellt sind, die übrige Fahrzeugumgebung aber weggelassen ist.

In dem zweiten Ausführungsbeispiel sind die Grundfunktionen für den Türbetrieb bzw. die Türbetätigung in nur eine weitere elektronische Steuereinheit 10 des weiteren Teilsystems des Fahrzeugs integriert, d.h. werden von dieser übernommen, verarbeitet und/oder ausgeführt. In anderen Worten ist in diesem Ausführungsbeispiel ebenfalls nur eine weitere elektronische Steuereinheit 10 des weiteren Teilsystems des Fahrzeugs vorgesehen. Diejenigen Funktionen des Türbetriebssystems, die nicht wie vorstehend beschrieben in die weitere elektronische Steuereinheit 10 integriert sind, werden von dem Fahrzeugmultiplex, d.h. der geeignet angebundenen elektronischen Fahrzeug-Multiplex-Steuereinheit 2 übernommen, verarbeitet und/oder ausgeführt.

Verbindungen zwischen den einzelnen Türen 4 und 6, der elektronischen Fahrzeug-Multiplex-Steuereinheit 2 und/oder der weiteren elektronischen Steuereinheit 10 des weiteren Teilsystems sind dazu jeweils bidirektional wie in Fig. 2 gezeigt hergestellt.

Im Unterschied zu dem ersten Ausführungsbeispiel weist die weitere elektronische Steuereinheit 10 und/oder die elektronische Fahrzeug-Multiplex-Steuereinheit 2 mehr freie Anschlüsse bzw. Pins auf, als für die von ihr übernommenen Funktionen des Türbetriebssystems benötigt werden.

Die weitere elektronische Steuereinheit 10 kann daher als Anschlusserweiterung für die elektronische Fahrzeug-Multiplex-Steuereinheit 2 konfiguriert und angeordnet werden, die eine Kommunikation und/oder Signalisierung oder dergleichen betreffend in der elektronischen Fahrzeug-Multiplex-Steuereinheit 2 integrierte Funktionen über eine vorbestimmte Verbindungsanordnung zu bzw. mit der elektronischen Fahrzeug-Multiplex-Steuereinheit 2 (angedeutet durch einen Doppelpfeil), beispielsweise eine Busverbindung, von dieser empfängt, an diese übermittelt, und zu einer jeweiligen der Türen 4, 6 über eigene Anschlüsse ausleitet und/oder entgegennimmt.

Auf diese Weise ist es möglich, eine Verteilung von Funktionen des Türbetriebssystems entsprechend beispielsweise einer Leistungsfähigkeit der Hardware und/oder verfügbaren Anschlüssen auf die elektronische Fahrzeug-Multiplex-Steuereinheit 2 und die weitere elektronische Steuereinheit 10 des weiteren Teilsystems auszulegen. Beispielsweise können Funktionen des Türbetriebssystems, für welche die elektronische Fahrzeug-Multiplex-Steuereinheit 2 zwar über genügend Hardware-Leistung, Rechenkapazität oder dergleichen, nicht aber über dafür benötigte freie Anschlüsse verfügt, dennoch von der elektronischen Fahrzeug-Multiplex-Steuereinheit 2 verarbeitet und/oder ausgeführt und sodann über freie Anschlüsse der weiteren elektronischen Steuereinheit 10 kommuniziert, signalisiert und/oder ausgeführt werden.

Weiter beispielsweise können auf diese Weise Funktionen des Türbetriebssystems, für welche die weitere elektronische Steuereinheit 10 über etwa nicht ausreichende Verarbeitungsleistung verfügt, gezielt in die elektronische Fahrzeug-Multiplex-Steuereinheit 2 verlagert werden, obschon der "Anschluss" dieser Funktionen nach wie vor an der weiteren elektronischen Steuereinheit 10 erfolgt.

Es versteht sich, dass auch umgekehrt die elektronische Fahrzeug-Multiplex-Steuereinheit 2 entsprechend als Anschlusserweiterung für die weitere elektronische Steuereinheit 10 konfiguriert und angeordnet werden kann, wenn diese über freie Kapazität, Leistung und/oder Anschlüsse verfügt, die für in die elektronische Steuereinheit 10 integrierte Funktionen genutzt werden sollen.

Es ist auf diese Weise möglich, eine größere Anzahl von Funktionen des Türbetriebssystems zu realisieren, die bereitzustellende Anzahl der Funktionen optimiert zu verteilen, und/oder den notwendigen Verkabelungsaufwand zu minimieren.

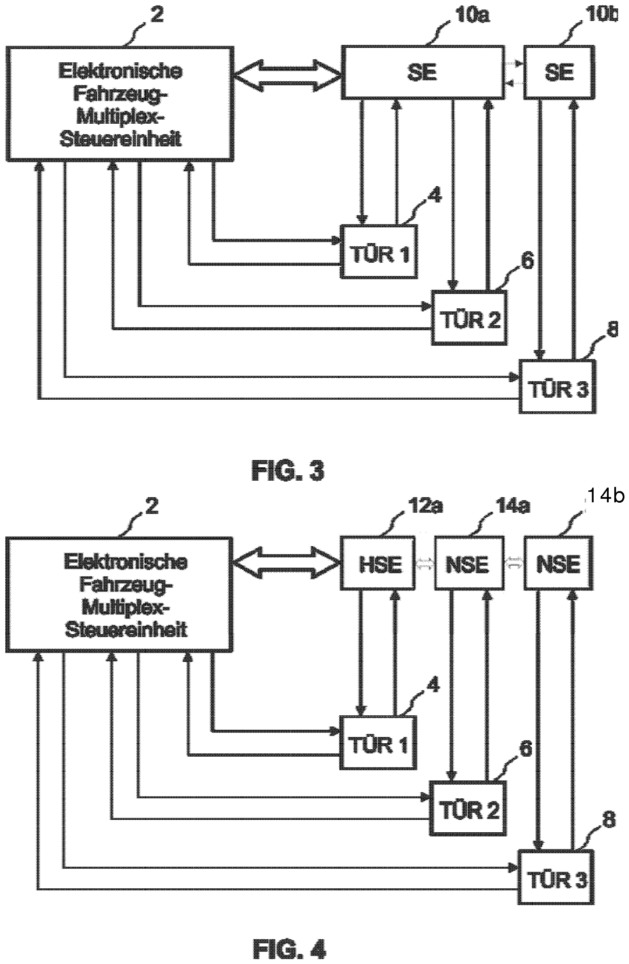

Fig. 3 zeigt stark vereinfacht und ausschnittsweise ein integriertes und kombiniertes Türbetriebssystem für ein Nutzfahrzeug mit drei Türen gemäß einem dritten Ausführungsbeispiel. Stark vereinfacht und ausschnittsweise dahingehend, dass nur die elektronische Fahrzeug-Multiplex-Steuereinheit 2, eine erste Tür 4, eine zweite Tür 6, eine dritte Tür 8, eine erste weitere elektronische Steuereinheit (SE) 10a eines weiteren Teilsystems des Fahrzeugs, eine zweite weitere elektronische Steuereinheit (SE) 10b des weiteren Teilsystems, und jeweils (durch Pfeile angedeutet) Verbindungen zwischen diesen für das hier beschriebene Türbetriebssystem relevanten Komponenten dargestellt sind, die übrige Fahrzeugumgebung aber weggelassen ist.

In dem dritten Ausführungsbeispiel sind möglichst viele Funktionen für den Türbetrieb bzw. die Türbetätigung in die mehreren weitere elektronische Steuereinheiten 10a, 10b des weiteren Teilsystems des Fahrzeugs integriert, d.h. werden von diesen übernommen, verarbeitet und/oder ausgeführt. In anderen Worten sind in diesem Ausführungsbeispiel mehrere weitere elektronische Steuereinheiten 10a, 10b, ... des weiteren Teilsystems des Fahrzeugs vorgesehen, welche entsprechend einzelnen der Türen 4, 6 und 8 zugeordnet und darüber hinaus untereinander verbunden sind. Diejenigen Funktionen des Türbetriebssystems, die nicht wie vorstehend beschrieben in die weiteren elektronischen Steuereinheiten 10a, 10b, ... integriert sind, werden von dem Fahrzeugmultiplex, d.h. der geeignet angebundenen elektronischen Fahrzeug-Multiplex-Steuereinheit 2 übernommen, verarbeitet und/oder ausgeführt.

Verbindungen zwischen den einzelnen Türen 4, 6 und 8, der elektronischen Fahrzeug-Multiplex-Steuereinheit 2 und/oder den weiteren elektronischen Steuereinheiten 10a, 10b, ... des weiteren Teilsystems sind dazu jeweils bidirektional wie in Fig. 3 gezeigt hergestellt. Wie dargestellt sind zwei Türen 4, 6 und die diesen zugeordnete erste weitere elektronische Steuereinheit 10a wie in dem zweiten Ausführungsbeispiel mit der elektronischen Fahrzeug-Multiplex-Steuereinheit 2 verbunden, und ist eine zweite weitere elektronische Steuereinheit 10b vorgesehen, die einerseits mit der dritten Tür 8 und andererseits mit der ersten weiteren elektronischen Steuereinheit 10a verbunden ist. Die dritte Tür 8 wiederum ist wie in dem ersten Ausführungsbeispiel ebenfalls mit der elektronischen Fahrzeug-Multiplex-Steuereinheit 2 verbunden. In einer Modifikation des dritten Ausführungsbeispiels mit seinen zwei weiteren elektronischen Steuereinheiten 10a, 10b im Gesamtsystem können auch drei weitere elektronische Steuereinheiten 10a, 10b, ... vorgesehen sein, d.h. jeweils eine weitere elektronische Steuereinheit 10a, 10b und (nicht gezeigt) 10c für jeweils eine der Türen 4, 6 und 8.

Fig. 4 zeigt stark vereinfacht und ausschnittsweise ein integriertes und kombiniertes Türbetriebssystem für ein Nutzfahrzeug mit drei Türen gemäß einem vierten Ausführungsbeispiel. Stark vereinfacht und ausschnittsweise dahingehend, dass nur die elektronische Fahrzeug-Multiplex-Steuereinheit 2, eine erste Tür 4, eine zweite Tür 6, eine dritte Tür 8, eine erste weitere elektronische Steuereinheit (SE) 12a eines weiteren Teilsystems des Fahrzeugs, die eine Master- oder Hauptsteuereinheit (HSE) des weiteren Teilsystems bildet und in diesem Ausführungsbeispiel der ersten Tür 4 mit in diesem Fall der Funktion einer Eingangstür zugeordnet ist, eine zweite weitere elektronische Steuereinheit 14a des weiteren Teilsystems, die eine erste Slave- oder Nebensteuereinheit (NSE) des weiteren Teilsystems bildet und in diesem Ausführungsbeispiel der zweiten Tür 6 mit der Funktion einer Ausgangstür zugeordnet ist, eine dritte weitere elektronische Steuereinheit 14b des weiteren Teilsystems, die eine zweite Slave- oder Nebensteuereinheit (NSE) des weiteren Teilsystems bildet und in diesem Ausführungsbeispiel der dritten Tür 8 mit ebenfalls der Funktion einer Ausgangstür zugeordnet ist, und jeweils (durch Pfeile angedeutet) Verbindungen zwischen diesen für das hier beschriebene Türbetriebssystem relevanten Komponenten dargestellt sind, die übrige Fahrzeugumgebung aber weggelassen ist.

In dem vierten Ausführungsbeispiel sind möglichst viele Funktionen für den Türbetrieb bzw. die Türbetätigung in die mehreren weitere elektronische Steuereinheiten 12a, 14a und 14bb des weiteren Teilsystems des Fahrzeugs integriert, d.h. werden von diesen übernommen, verarbeitet und/oder ausgeführt. In anderen Worten sind in diesem Ausführungsbeispiel mehrere weitere elektronische Steuereinheiten 12a, 14a und 14b des weiteren Teilsystems des Fahrzeugs vorgesehen, welche entsprechend den einzelnen Türen 4, 6 und 8 zugeordnet und darüber hinaus untereinander verbunden sind. Die Verbindung der elektronischen Fahrzeug-Multiplex-Steuereinheit 2 und der mehreren weiteren elektronischen Steuereinheiten 12a, 14a und 14b untereinander ist vorzugsweise eine Busverbindung (angedeutet durch jeweilige Doppelpfeile), nach Art und Weise wie in dem zweiten Ausführungsbeispiel. Diejenigen Funktionen des Türbetriebssystems, die nicht wie vorstehend beschrieben in die weiteren elektronischen Steuereinheiten 12a, 14a und 14b integriert sind, werden von dem Fahrzeugmultiplex, d.h. der geeignet angebundenen elektronischen Fahrzeug-Multiplex-Steuereinheit 2 übernommen, verarbeitet und/oder ausgeführt.

Verbindungen zwischen den einzelnen Türen 4, 6 und 8, der elektronischen Fahrzeug-Multiplex-Steuereinheit 2 und/oder den weiteren elektronischen Steuereinheiten 12a, 14a und 14b des weiteren Teilsystems sind dazu jeweils bidirektional wie in Fig. 4 gezeigt hergestellt. Wie dargestellt ist die erste Tür 4 mit der elektronischen Fahrzeug-Multiplex-Steuereinheit 2 und der ersten weiteren elektronischen Steuereinheit bzw. Hauptsteuereinheit 12a verbunden, ist die zweite Tür 6 mit der elektronischen Fahrzeug-Multiplex-Steuereinheit 2 und der zweiten weiteren elektronischen Steuereinheit bzw. ersten Nebensteuereinheit 14a verbunden, und ist die dritte Tür 8 mit der elektronischen Fahrzeug-Multiplex-Steuereinheit 2 und der dritten weiteren elektronischen Steuereinheit bzw. zweiten Nebensteuereinheit 14b verbunden.

Aufgrund der Einteilung der Türen in Einstiegstüren (Tür 4) und Ausstiegstüren (Türen 6 und 8) in diesem Ausführungsbeispiel und der daraus resultierenden Aufschlüsselung der Verteilung von Funktionen des Türbetriebssystems und Anschlüssen hierfür kann beispielsweise für die erste und die zweite Nebensteuereinheit 14a, 14b eine elektronische Steuereinheit eines einkanaligen oder zweikanaligen elektro-pneumatischen Moduls verwendet werden. In diesem Fall werden somit für das Türbetriebssystem ein erstes weiteres Teilsystem (beispielsweise wie vorstehend ein elektronisches Fahrwerksregelungs-, Radaufhängungsregelungs-, Niveauregelungs-(ELC) oder Dämpferregelungssystem, ein elektronisches Antiblockiersystem oder dergleichen), in dem sich die gegebenenfalls leistungsfähigere und komplexere erste weitere elektronische Steuereinheit 12a als Hauptsteuereinheit befindet, und ein zweites weiteres Teilsystem (beispielsweise die Elektronik in elektro-pneumatischen Modulen (EPM) eines elektronischen Bremssystems, die in vorteilhafter Nähe zu Achse(n) und Ausstiegstüren angeordnet sind), in dem sich die gegebenenfalls geringer leistungsfähigen und weniger komplexen zweiten weiteren elektronischen Steuereinheiten 14a, 14b als Nebensteuereinheit befinden, zur Realisierung des Türbetriebssystems genutzt.

Nachstehend wird eine beispielhafte Verteilung von Funktionen des Türbetriebssystems für drei Türen gemäß den vorstehenden Ausführungsbeispielen näher beschrieben.

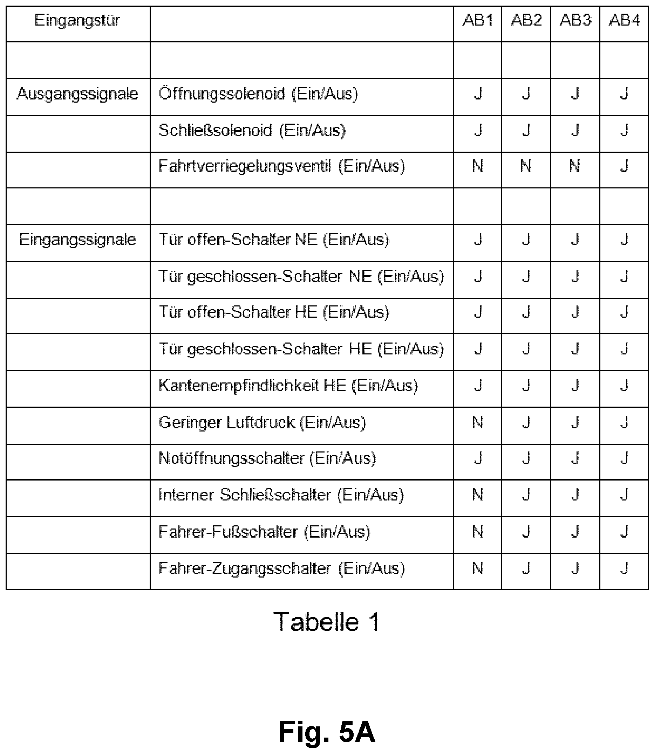

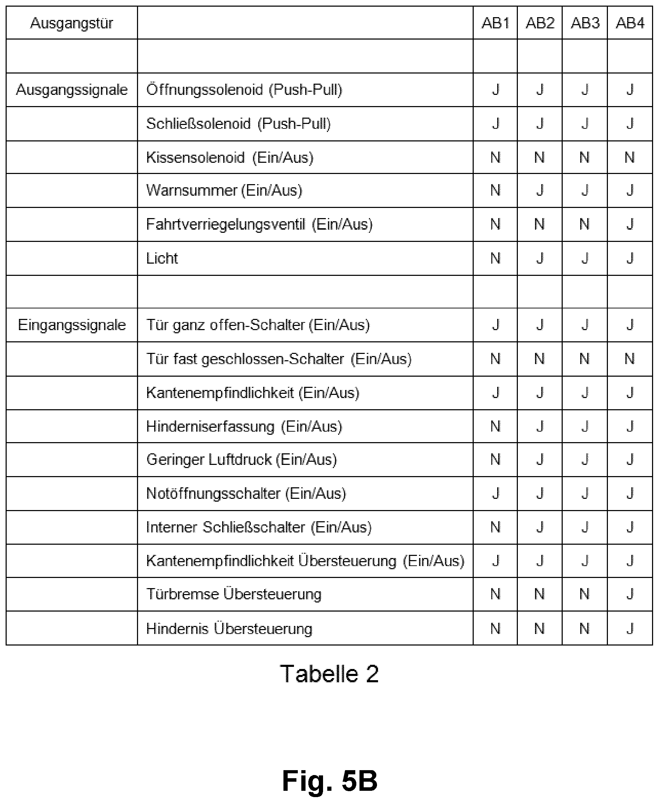

Fig. 5A und 5B zeigen jeweils eine Tabelle 1, 2 mit einer Auswahl von Funktionen für das weitere Teilsystem bzw. die weitere(n) Steuereinheit(en) 10a bzw. 10a, 10b, ... bzw. 12a, 14a, 14b, die für den Betrieb einer Eingangstür respektive einer Ausgangstür in einem Nutzfahrzeug für den Personentransport, beispielsweise einem Omnibus, verwendet werden können. Die Art und die Anzahl der Funktionen sind auszugsweise, beispielhaft und naturgemäß nicht auf die in der Tabelle gezeigten beschränkt.

In der in Fig. 5A gezeigten Tabelle 1 für eine Eingangstür und in der in Fig. 5B gezeigten Tabelle 2 für eine Ausgangstür benennt (von links nach rechts) die erste Spalte die Art der Tür und eine jeweilige Signalart (Ausgangssignale oder Eingangssignale). Die zweite Spalte benennt die jeweils zu signalisierende, zu steuernde und/oder zu kommunizierende Funktion. Die nachfolgenden Spalten AB1 bis AB4 beziehen sich auf die hierin beschriebenen Ausführungsbeispiele eins bis vier. Die dritte Spalte AB1 der Tabelle betrifft somit beispielsweise das erste Ausführungsbeispiel. Die Buchstaben J und N in einzelnen Tabellenfeldern geben an, ob ein entsprechender Eingang bzw. Ausgang respektive ein entsprechendes Signal für eine Funktion benötigt wird (J) oder nicht (N). In dem ersten Ausführungsbeispiel muss das weitere Teilsystem zum Beispiel die Funktion für einen Warnsummer, der Passagiere etwa auf ein bevorstehendes Schließen der Tür aufmerksam macht, oder ein Ventil (Fahrtverriegelungsventil), das eine Tür bei Erreichen einer bestimmten Geschwindigkeit des Fahrzeugs verriegelt, nicht übernehmen (N), aber die für den Notöffnungsschalter notwendige Funktionalität bereitstellen. Aus den Tabellen 1 und 2 ist auch ersichtlich, dass sich die Anzahl der Funktionen zwischen den einzelnen Ausführungsbeispielen unterscheidet.

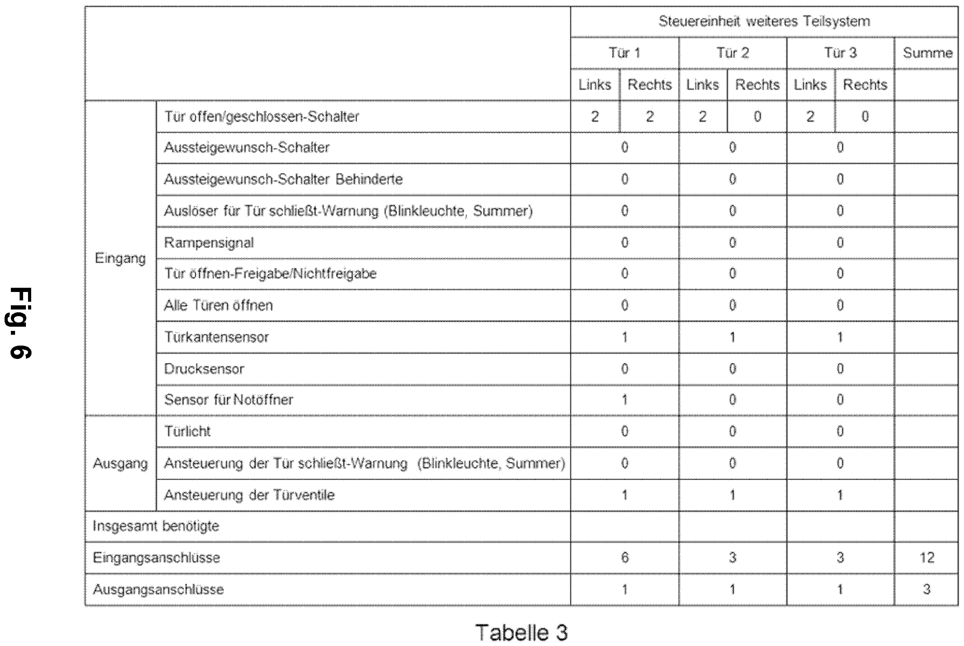

Fig. 6 zeigt eine Tabelle 3, aus welcher sich für das erste Ausführungsbeispiel (Spalte AB1 in den Tabellen 1 und 2 in Fig. 5A und 5B) die benötigten Anzahlen von Eingangsanschlüssen bzw. Eingangspins und Ausgangsanschlüssen bzw. Ausgangspins ergeben.

Nach der in Fig. 6 gezeigten Tabelle 3 werden beispielsweise nur für die erste Tür 4, die in diesem Fall eine Doppeltür mit einem linken und einem rechten Flügel ist, vier Eingänge für Schalter, die den Öffnungs- bzw. Schließzustand der Tür signalisieren, für die zweite Tür 6 und die dritte Tür 8, die in diesem Fall einflügelige Türen sind, jeweils zwei Eingänge für Schalter, die den Öffnungs- bzw. Schließzustand dieser Türen signalisieren, jeweils ein Eingang für einen Sensor, der die Türkante bzw. den Türrahmen überwacht, und jeweils ein Ausgang zur Ansteuerung der (beispielsweise bei Druckluftbetrieb vorhandenen) Türventile benötigt.

In der Summe resultieren somit für die erste Tür 4 sechs Eingangsanschlüsse und ein Ausgangsanschluss, für die zweite Tür 6 drei Eingangsanschlüsse und ein Ausgangsanschluss, und für die dritte Tür 8 ebenfalls drei Eingangsanschlüsse und ein Ausgangsanschluss, in der Summe mithin 12 Eingangsanschlüsse bzw. Pins und drei Ausgangsanschlüsse.

Für das zweite bis vierte Ausführungsbeispiel resultieren aufgrund der unterschiedlichen Funktionsanzahlen jeweils andere Anschlusszahlen, bei jedoch (nicht gezeigter) vergleichbarer bzw. analoger Ermittlung. Anhand Tabellen wie in Fig. 5A, 5B und 6 gezeigt kann sodann vorteilhaft eine für ein bestimmtes Fahrzeug mit gewünschter Funktionalität des Türbetriebssystems zweckmäßige der Ausführungsformen und/oder Modifikationen bzw. bestimmt werden und/oder eine Verteilung dieser Funktionalität auf ein bestehendes Gesamtsystem, beispielsweise für den Fall einer Nachrüstung oder Erweiterung, vornehmen und/oder geeignet auslegen bzw. anpassen.

Weiterhin ist es möglich, Funktionen eines Fahrgastüberwachungssystems und/oder eines Fahrgastzählsystems in das Türbetriebssystem zu integrieren und dazu fahrzugintern entsprechende Komponenten und Erfassungseinrichtungen türnah an den entsprechenden Stellen anzuordnen, und/oder etwa das Fahrgastüberwachungssystem derart an eine mobile Anwendung bzw. App zu koppeln, dass ein mobiles Kommunikationsgerät eines Fahrgasts Orts- und/oder Nachverfolgungsinformation über die Position des Nutzfahrzeugs erfasst und an eine zentrale Datenverarbeitungseinrichtung übermittelt und/oder solche, von einem Mobilgerät eines anderen Fahrgasts bereitgestellte, Information von der zentralen Datenverarbeitungseinrichtung empfängt.

Das Fahrgastüberwachungssystem kann in sich integriert zudem ein elektronisches Fahrscheinsystem beinhalten, das zur Bezahlung von Fahrscheinen an eine mobile Anwendung auf einem mobilen Kommunikationsgerät eines Fahrgasts gekoppelt ist.

Die Erfindung wurde vorstehend anhand von Ausführungsbeispielen, Modifikationen und Alternativen beschrieben. Es versteht sich jedoch, dass die Erfindung nicht auf diese Ausführungsbeispiele, Modifikationen und Alternativen beschränkt ist, sondern alle weiter gehenden Änderungen und Szenarien umfasst, die sich für den Fachmann ohne Weiteres aus der Beschreibung ergeben und die im Rahmen des durch die Patentansprüche definierten Schutzumfangs liegen.

Ein erfindungsgemäßes integriertes und kombiniertes Türbetriebssystem für ein Nutzfahrzeug beinhaltet somit zumindest eine zentrale elektronische Steuereinheit 2, die einen ersten Teil von Funktionen einer Türbetriebssteuerung für Einstiegs- und/oder Ausstiegstüren des Nutzfahrzeugs bereitstellt und verarbeitet, und zumindest eine weitere elektronische Steuereinheit 10; 10a, 10b; 12a, 14a, 14b in einem weiteren Systemteil des Nutzfahrzeugs, wobei der weitere Systemteil für die Steuerung anderer Funktionen als denen des Türbetriebssystems zuständig ist. Die zumindest eine weitere elektronische Steuereinheit unterscheidet sich von der zumindest einen zentralen elektronischen Steuereinheit 2 und stellt zusätzlich zu den anderen Funktionen des weiteren Systemteils in bezüglich Leistungsfähigkeit und/oder Anzahl von Anschlüssen freien Kapazitäten, die nicht von den anderen Funktionen belegt sind, einen zweiten Teil von Funktionen der Türbetriebssteuerung bereit und verarbeitet diese. Steuer-Eingangssignale und Steuer-Ausgangssignale betreffend den ersten Teil von Funktionen werden von der zumindest einen zentralen elektronischen Steuereinheit 2 über eine Multiplex-Busverbindung aus Richtung zumindest einer Tür des Nutzfahrzeugs kommend entgegengenommen und/oder in Richtung zumindest einer Tür des Nutzfahrzeugs gehend ausgegeben, und Steuer-Eingangssignale und Steuer-Ausgangssignale betreffend den zweiten Teil von Funktionen von der zumindest einen weiteren elektronischen Steuereinheit werden aus Richtung zumindest einer Tür des Nutzfahrzeugs kommend direkt entgegengenommen und/oder in Richtung zumindest einer Tür des Nutzfahrzeugs gehend direkt ausgegeben.

## Patentansprüche

1. Integriertes und kombiniertes Türbetriebssystem für ein Nutzfahrzeug, mit zumindest einer zentralen elektronischen Steuereinheit (2) innerhalb eines Gesamtsystems des Nutzfahrzeugs, die einen ersten Teil von Funktionen einer Türbetriebssteuerung des Türbetriebssystems bereitstellt und verarbeitet, und zumindest einer weiteren elektronischen Steuereinheit (10; 10a, 10b; 12a, 14a, 14b) in einem weiteren Systemteil des Gesamtsystems, wobei der weitere Systemteil für die Steuerung anderer Funktionen als denen des Türbetriebssystems zuständig ist, die zumindest eine weitere elektronische Steuereinheit (10; 10a, 10b; 12a, 14a, 14b) sich von der zumindest einen zentralen elektronischen Steuereinheit (2) unterscheidet, wobei Steuer-Eingangssignale und Steuer-Ausgangssignale betreffend den ersten Teil von Funktionen des Türbetriebssystems von der zumindest einen zentralen elektronischen Steuereinheit (2) über eine Multiplex-Busverbindung aus Richtung zumindest einer Tür des Nutzfahrzeugs kommend entgegengenommen und/oder in Richtung zumindest einer Tür des Nutzfahrzeugs gehend ausgegeben werden, **dadurch gekennzeichnet, dass**
a) die zumindest eine weitere elektronische Steuereinheit (10; 10a, 10b; 12a, 14a, 14b) zusätzlich zu den anderen Funktionen des weiteren Systemteils in bezüglich Leistungsfähigkeit und/oder Anzahl von Anschlüssen freien Kapazitäten, die nicht von den anderen Funktionen belegt sind, einen zweiten Teil von Funktionen der Türbetriebssteuerung des Türbetriebssystems bereitstellt und verarbeitet, und
b) Steuer-Eingangssignale und Steuer-Ausgangssignale betreffend den zweiten Teil von Funktionen von der zumindest einen weiteren elektronischen Steuereinheit (10; 10a, 10b; 12a, 14a, 14b) aus Richtung zumindest einer Tür des Nutzfahrzeugs kommend direkt entgegengenommen und/oder in Richtung zumindest einer Tür des Nutzfahrzeugs gehend direkt ausgegeben werden.

2. Integriertes und kombiniertes Türbetriebssystem nach Anspruch 1, **dadurch gekennzeichnet, dass** der zumindest eine weitere Systemteil ein elektronisches Bremssystem oder ein Teilsystem desselben ist.

3. Integriertes und kombiniertes Türbetriebssystem nach Anspruch 1, **dadurch gekennzeichnet, dass** der zumindest eine weitere Systemteil eine elektronische Fahrwerksregelung, Radaufhängungsregelung, Niveauregelung (ELC) oder Dämpferregelung ist.

4. Integriertes und kombiniertes Türbetriebssystem nach Anspruch 1, **dadurch gekennzeichnet, dass** die Multiplex-Busverbindung ein CAN-Bus ist.

5. Integriertes und kombiniertes Türbetriebssystem nach Anspruch 1, **dadurch gekennzeichnet, dass** der zumindest eine weitere Systemteil eine elektronischen Steuereinheit (10) und Grundfunktionen des Türbetriebs für drei Türen des Nutzfahrzeugs aufweist.

6. Integriertes und kombiniertes Türbetriebssystem nach Anspruch 5, **dadurch gekennzeichnet, dass** Grundfunktionen für die Türbetätigung in die Steuerung einer elektronischen Fahrwerksregelung, Radaufhängungsregelung, Niveauregelung (ELC) oder Dämpferregelung als dem weiteren Systemteil integriert sind, genau eine elektronische Steuereinheit (10) für die elektronische Fahrwerksregelung, Radaufhängungsregelung, Niveauregelung (ELC) oder Dämpferregelung und die Grundfunktionen des Türbetriebs vorgesehen ist, und die zentrale elektronische Steuereinheit (2) dazu angeordnet ist, diejenigen Funktionen des Türbetriebssystems bereitzustellen, welche nicht in die elektronische Steuereinheit (10) der elektronischen Fahrwerksregelung, Radaufhängungsregelung, Niveauregelung (ELC) oder Dämpferregelung integriert sind.

7. Integriertes und kombiniertes Türbetriebssystem nach Anspruch 1, **dadurch gekennzeichnet, dass** der zumindest eine weitere Systemteil eine elektronische Steuereinheit (10) und Grundfunktionen des Türbetriebs für zwei Türen des Nutzfahrzeugs aufweist.

8. Integriertes und kombiniertes Türbetriebssystem nach Anspruch 7, **dadurch gekennzeichnet, dass** Grundfunktionen für die Türbetätigung in die Steuerung einer elektronischen Fahrwerksregelung, Radaufhängungsregelung, Niveauregelung (ELC) oder Dämpferregelung als dem weiteren Systemteil integriert sind, genau eine elektronische Steuereinheit (10) für die elektronische Fahrwerksregelung, Radaufhängungsregelung, Niveauregelung (ELC) oder Dämpferregelung und die Grundfunktionen des Türbetriebs vorgesehen ist, und die zentrale elektronische Steuereinheit (2) dazu angeordnet ist, diejenigen Funktionen des Türbetriebssystems bereitzustellen, welche nicht in die Steuerung der elektronischen Fahrwerksregelung, Radaufhängungsregelung, Niveauregelung (ELC) oder Dämpferregelung integriert sind, wobei die zentrale elektronische Steuereinheit (2) und die genau eine elektronische Steuereinheit (10) derart miteinander verbunden sind, dass Funktionen einer Steuereinheit (2, 10) durch die jeweils andere Steuereinheit (2, 10) durchleitbar und an freien Anschlüssen der jeweils anderen Steuereinheit (2, 10) bereitstellbar sind.

9. Integriertes und kombiniertes Türbetriebssystem nach Anspruch 1, **dadurch gekennzeichnet, dass** der zumindest eine weitere Systemteil zumindest zwei elektronische Steuereinheiten (10a, 10b) beinhaltet.

10. Integriertes und kombiniertes Türbetriebssystem nach Anspruch 9, **dadurch gekennzeichnet, dass** alle Funktionen für die Türbetätigung in die Steuerung der elektronischen Fahrwerksregelung, Radaufhängungsregelung, Niveauregelung (ELC) oder Dämpferregelung als dem weiteren Systemteil integriert sind, das Nutzfahrzeug drei Türen (4, 6, 8) aufweist, eine elektronische Steuereinheit (10a) für zwei der drei Türen (4, 6) vorgesehen ist und eine elektronische Steuereinheit (10b) für die dritte der drei Türen vorgesehen ist, und die zentrale elektronische Steuereinheit (2) dazu angeordnet ist, diejenigen Funktionen des Türbetriebssystems bereitzustellen, welche nicht in die zumindest zwei elektronischen Steuereinheiten (10a, 10b) der elektronischen Fahrwerksregelung, Radaufhängungsregelung, Niveauregelung (ELC) oder Dämpferregelung integriert sind.

11. Integriertes und kombiniertes Türbetriebssystem nach Anspruch 9, **dadurch gekennzeichnet, dass** alle Funktionen für die Türbetätigung in die Steuerung der elektronischen Fahrwerksregelung, Radaufhängungsregelung, Niveauregelung (ELC) oder Dämpferregelung als dem weiteren Systemteil integriert sind, das Nutzfahrzeug drei Türen (4, 6, 8) aufweist und genau zwei elektronische Steuereinheiten (10a, 10b) verteilt für die drei Türen (4, 6, 8) vorgesehen sind, und die zentrale elektronische Steuereinheit (2) dazu angeordnet ist, diejenigen Funktionen des Türbetriebssystems bereitzustellen, welche nicht in die genau zwei elektronischen Steuereinheiten (10a, 10b) der elektronischen Fahrwerksregelung, Radaufhängungsregelung, Niveauregelung (ELC) oder Dämpferregelung integriert sind.

12. Integriertes und kombiniertes Türbetriebssystem nach Anspruch 1, **dadurch gekennzeichnet, dass** der zumindest eine weitere Systemteil eine erste elektronische Steuereinheit (12a), die als eine Hauptsteuereinheit ausgelegt und einer Einstiegstür des Nutzfahrzeugs zugeordnet ist, und zumindest eine von der ersten elektronischen Steuereinheit (12a) abhängige zweite elektronische Steuereinheit (14a, 14b), die als eine Nebensteuereinheit ausgelegt und einer Ausstiegstür des Nutzfahrzeugs zugeordnet ist, beinhaltet.

13. Integriertes und kombiniertes Türbetriebssystem nach Anspruch 12, **dadurch gekennzeichnet, dass** alle Funktionen für die Türbetätigung in die Steuerung der elektronischen Fahrwerksregelung, Radaufhängungsregelung, Niveauregelung (ELC) oder Dämpferregelung als dem weiteren Systemteil integriert sind, genau eine erste elektronische Steuereinheit (12a) die Hauptsteuereinheit bildet und für die elektronische Fahrwerksregelung, Radaufhängungsregelung, Niveauregelung (ELC) oder Dämpferregelung und/oder den Türbetrieb vorgesehen ist, und jeder von Ausstiegstüren des Nutzfahrzeugs genau eine zweite elektronische Steuereinheit (14a, 14b) als von der Hauptsteuereinheit abhängige Nebensteuereinheit zugeordnet ist.

14. Integriertes und kombiniertes Türbetriebssystem nach Anspruch 1, **dadurch gekennzeichnet, dass** der zumindest eine weitere Systemteil eine erste elektronische Steuereinheit (12a), die als eine Hauptsteuereinheit ausgelegt und einer Einstiegstür des Nutzfahrzeugs zugeordnet ist, und zumindest eine von der ersten elektronischen Steuereinheit (12a) abhängige zweite elektronische Steuereinheit (14a, 14b), die als eine Nebensteuereinheit ausgelegt und einer Ausstiegstür des Nutzfahrzeugs zugeordnet ist, und ein Türsteuerventil mit darin integrierten Türsteuerungsfunktionen beinhaltet.

15. Integriertes und kombiniertes Türbetriebssystem nach einem der vorangehenden Ansprüche, **dadurch gekennzeichnet, dass** die Steuer-Eingangssignale und die Steuer-Ausgangssignale betreffend den ersten Teil von Funktionen der Türbetriebssteuerung Signale für ein Aussteigeindikatorsignal, ein Notsignal, eine Blinkindikatorleuchte und/oder einen Summer beinhalten.

16. Integriertes und kombiniertes Türbetriebssystem nach einem der vorangehenden Ansprüche, **dadurch gekennzeichnet, dass** die Steuer-Eingangssignale und die Steuer-Ausgangssignale betreffend den zweiten Teil von Funktionen der Türbetriebssteuerung Meldesignale und/oder Zustandssignale für die Geöffnet-Stellung einer Tür, die Geschlossen-Stellung einer Tür, eine Notöffnung einer Tür, eines Angehalten-Zustands des Nutzfahrzeugs, eines Geparkt-Zustands des Nutzfahrzeugs, und/oder eines Fahrzustands des Nutzfahrzeugs beinhalten.

17. Integriertes und kombiniertes Türbetriebssystem nach Anspruch 7, 9 oder 12, **dadurch gekennzeichnet, dass** zumindest eine elektronische Steuereinheit (10; 10a, 10b; 12a, 14a, 14b) des weiteren Systemteils für eine Kommunikation mit der zentralen elektronischen Steuereinheit (2) verbunden ist und eine Ausgabe-/Eingabe-Anschlusserweiterung für die zentrale elektronische Steuereinheit (2) bildet.

18. Integriertes und kombiniertes Türbetriebssystem nach Anspruch 12, **dadurch gekennzeichnet, dass** die erste elektronische Steuereinheit (12a), die als die Hauptsteuereinheit ausgelegt ist, und die zumindest eine zweite elektronische Steuereinheit, die als eine Nebensteuereinheit ausgelegt ist, für eine Kommunikation mit der zentralen elektronischen Steuereinheit (2) verbunden sind und jeweils eine Ausgabe-/Eingabe-Anschlusserweiterung für die zentrale elektronische Steuereinheit (2) bilden.

19. Integriertes und kombiniertes Türbetriebssystem nach einem der vorangehenden Ansprüche, mit weiter einem Fahrgastüberwachungssystem und/oder einem Fahrgastzählsystem.

20. Integriertes und kombiniertes Türbetriebssystem nach Anspruch 19, **dadurch gekennzeichnet, dass** das Fahrgastüberwachungssystem derart an eine mobile Anwendung gekoppelt ist, dass ein mobiles Kommunikationsgerät eines Fahrgasts Orts- und/oder Nachverfolgungsinformation über die Position des Nutzfahrzeugs erfasst und an eine zentrale Datenverarbeitungseinrichtung übermittelt und/oder solche, von einem Mobilgerät eines anderen Fahrgasts bereitgestellte, Information von der zentralen Datenverarbeitungseinrichtung empfängt.

21. Integriertes und kombiniertes Türbetriebssystem nach Anspruch 19, **dadurch gekennzeichnet, dass** das Fahrgastüberwachungssystem in sich integriert ein elektronisches Fahrscheinsystem beinhaltet, das zur Bezahlung von Fahrscheinen an eine mobile Anwendung auf einem mobilen Kommunikationsgerät eines Fahrgasts gekoppelt ist.

## Claims

1. Integrated and combined door-operating system for a commercial vehicle, having at least one central electronic control unit (2) within an overall system of the commercial vehicle, which control unit (2) makes available and processes a first set of functions of a door-operating control system of the door-operating system, and at least one further electronic control unit (10; 10a, 10b; 12a, 14a, 14b) in a further system part of the overall system, wherein the further system part is responsible for controlling other functions than those of the door-operating system, the at least one further electronic control unit (10; 10a, 10b; 12a, 14a, 14b) differs from the at least one central electronic control unit (2), wherein control input signals and control output signals relating to the first set of functions of the door-operating system are received by the at least one central electronic control unit (2) from the direction of at least one door of the commercial vehicle and/or are output in the direction of at least one door of the commercial vehicle via a multiplex bus connection,
**characterized in that**
a) the at least one further electronic control unit (10; 10a, 10b; 12a, 14a, 14b) makes available and processes, in addition to the other functions of the further system part in respect of power and/or number of connections of free capacitors which are not occupied by the other functions, a second set of functions of the door-operating control system of the door-operating system, and
b) control input signals and control output signals relating to the second set of functions are directly received by the at least one further electronic control unit (10; 10a, 10b; 12a, 14a, 14b) from the direction of at least one door of the commercial vehicle and/or are directly output in the direction of at least one door of the commercial vehicle.

2. Integrated and combined door-operating system according to Claim 1, **characterized in that** the at least one further system part is an electronic brake system or a sub-system thereof.

3. Integrated and combined door-operating system according to Claim 1, **characterized in that** the at least one further system part is an electronic chassis control system, wheel suspension control system, ride level control system (ELC) or shock absorber control system.

4. Integrated and combined door-operating system according to Claim 1, **characterized in that** the multiplex bus connection is a CAN bus.

5. Integrated and combined door-operating system according to Claim 1, **characterized in that** the at least one further system part has an electronic control unit (10) and basic functions of the door operation for three doors of the commercial vehicle.

6. Integrated and combined door-operating system according to Claim 5, **characterized in that** basic functions for activating the door are integrated into the control of an electronic chassis control system, wheel suspension control system, ride level control system (ELC) or shock absorber control system as the further system part, precisely one electronic control unit (10) is provided for the electronic chassis control system, wheel suspension control system, ride level control system (ELC) or shock absorber control system and the basic functions of the door operation, and the central electronic control unit (2) is arranged so as to make available those functions of the door-operating system which are not integrated into the electronic control unit (10) of the electronic chassis control system, wheel suspension control system, ride level control system (ELC) or shock absorber control system.

7. Integrated and combined door-operating system according to Claim 1, **characterized in that** the at least one further system part has an electronic control unit (10) and basic functions of the door operation for two doors of the commercial vehicle.

8. Integrated and combined door-operating system according to Claim 7, **characterized in that** basic functions for activating the door are integrated into the control of an electronic chassis control system, wheel suspension control system, ride level control system (ELC) or shock absorber control system as the further system part, precisely one electronic control unit (10) is provided for the electronic chassis control system, wheel suspension control system, ride level control system (ELC) or shock absorber control system and the basic functions of the door operation, and the central electronic control unit (2) is arranged so as to make available those functions of the door-operating system which are not integrated into the control of the electronic chassis control system, wheel suspension control system, ride level control system (ELC) or shock absorber control system, wherein the central electronic control unit (2) and the precisely one electronic control unit (10) are connected to one another in such a way that functions of one control unit (2, 10) can be conducted through the respective other control unit (2, 10) and made available at free connections of the respective other control unit (2, 10).

9. Integrated and combined door-operating system according to Claim 1, **characterized in that** the at least one further system part contains at least two electronic control units (10a, 10b).

10. Integrated and combined door-operating system according to Claim 9, **characterized in that** all the functions for activating the door are integrated into the control of the electronic chassis control system, wheel suspension control system, ride level control system (ELC) or shock absorber control system as the further system part, the commercial vehicle has three doors (4, 6, 8), an electronic control unit (10a) is provided for two of the three doors (4, 6), and an electronic control unit (10b) is provided for the third of the three doors, and the central electronic control unit (2) is arranged so as to make available those functions of the door-operating system which are not integrated into the at least two electronic control units (10a, 10b) of the electronic chassis control system, wheel suspension control system, ride level control system (ELC) or shock absorber control system.

11. Integrated and combined door-operating system according to Claim 9, **characterized in that** all the functions for activating the door are integrated into the control of the electronic chassis control system, wheel suspension control system, ride level control system (ELC) or shock absorber control system as the further system part, the commercial vehicle has three doors (4, 6, 8) and precisely two electronic control units (10a, 10b) are provided distributed for the three doors (4, 6, 8), and the central electronic control unit (2) is arranged so as to make available those functions of the door-operating system which are not integrated into the precisely two electronic control units (10a, 10b) of the electronic chassis control system, wheel suspension control system, ride level control system (ELC) or shock absorber control system.

12. Integrated and combined door-operating system according to Claim 1, **characterized in that** the at least one further system part contains a first electronic control unit (12a) which is configured as a main control unit and is assigned to an entry door of the commercial vehicle, and at least one second electronic control unit (14a, 14b) which is dependent on the first electronic control unit (12a), is configured as a secondary control unit and is assigned to an exit door of the commercial vehicle.

13. Integrated and combined door-operating system according to Claim 12, **characterized in that** all the functions for activating the door are integrated into the control of the electronic chassis control system, wheel suspension control system, ride level control system (ELC) or shock absorber control system as the further system part, precisely one first electronic control unit (12a) forms the main control unit and is provided for the electronic chassis control system, wheel suspension control system, ride level control system (ELC) or shock absorber control system and/or the door operation, and each of the exit doors of the commercial vehicle is assigned precisely one second electronic control unit (14a, 14b) as a secondary control unit which is dependent on the main control unit.

14. Integrated and combined door-operating system according to Claim 1, **characterized in that** the at least one further system part contains a first electronic control unit (12a) which is configured as a main control unit and is assigned to an entry door of the commercial vehicle, and at least one second electronic control unit (14a, 14b) which is dependent on the first electronic control unit (12a), is configured as a secondary control unit and is assigned to an exit door of the commercial vehicle, and a door control valve with door control functions integrated therein.

15. Integrated and combined door-operating system according to one of the preceding claims, **characterized in that** the control input signals and the control output signals relating to the first set of functions of the door-operating control include signals for an exit indicator signal, an emergency signal, a flashing indicator light and/or a buzzer.

16. Integrated and combined door-operating system according to one of the preceding claims, **characterized in that** the control input signals and the control output signals relating to the second set of functions of the door-operating control system include warning signals and/or status signals for the opened position of a door, the closed position of a door, an emergency opening of a door, a stopped status of the commercial vehicle, a parked status of the commercial vehicle and/or a driving status of the commercial vehicle.

17. Integrated and combined door-operating system according to Claim 7, 9 or 12, **characterized in that** at least one electronic control unit (10; 10a, 10b; 12, 14a, 14b) of the further system part is connected to the central electronic control unit (2) for the purpose of communication and forms an output/input connection extension for the central electronic control unit (2).

18. Integrated and combined door-operating system according to Claim 12, **characterized in that** the first electronic control unit (12a), which is configured as the main control unit, and the at least one second electronic control unit, which is configured as a secondary control unit, are connected to the central electronic control unit (2) for the purpose of communication and each form an output/input connection extension for the central electronic control unit (2).

19. Integrated and combined door-operating system according to one of the preceding claims, also having a passenger monitoring system and/or a passenger counting system.

20. Integrated and combined door-operating system according to Claim 19, **characterized in that** the passenger monitoring system is coupled to a mobile application in such a way that a mobile communication device of a passenger collects location and/or tracking information about the position of the commercial vehicle and transmits it to a central data processing device and/or receives such information, made available by a mobile device of another passenger, from the central data processing device.

21. Integrated and combined door-operating system according to Claim 19, **characterized in that** the passenger monitoring system contains an electronic ticket system which is integrated therein and is coupled, for the purpose of paying for tickets, to a mobile application on a mobile communication device of a passenger.

## Revendications

1. Système intégré et combiné de fonctionnement de portes pour un véhicule utilitaire, comprenant au moins une unité (2) électronique centrale de commande dans un système global du véhicule utilitaire, qui met à disposition et traite une première partie de fonctions d'une commande de fonctionnement de portes du système de fonctionnement de portes, et au moins une autre unité (10; 10a, 10b; 12a, 14a, 14b) électronique de commande dans une autre partie du système global, l'autre partie du système étant compétente pour la commande d'autres fonctions que celles du système de fonctionnement de portes, la au moins une autre unité (10; 10a, 10b; 12a, 14a, 14b) électronique de commande se différenciant de la au moins une unité (2) électronique centrale de commande, des signaux d'entrée de commande et des signaux de sortie de commande concernant la première partie de fonctions du système de fonctionnement de portes étant reçus par la au moins une unité (2) électronique centrale de commande par l'intermédiaire d'une liaison de bus multiplexe en venant d'une direction d'au moins une porte du véhicule utilitaire et/ou étant émis en allant en direction d'au moins une porte du véhicule utilitaire,
**caractérisé en ce que**
a) la au moins une autre unité (10; 10a, 10b; 12a, 14a, 14b) électronique de commande met à disposition et traite en plus des autres fonctions de l'autre partie du système en ce qui concerne la capacité de puissance et/ou le nombre de connexions de capacités libres, qui ne sont pas occupées par d'autres fonctions, une deuxième partie de fonctions de la commande du fonctionnement de portes du système de fonctionnement de portes, et
b) de signaux d'entrée de commande et des signaux de sortie de commande concernant la deuxième partie de fonctions sont reçus directement par la au moins une autre unité (10; 10a, 10b; 12a, 14a, 14b) électronique en venant d'une direction d'au moins une porte du véhicule utilitaire et/ou sont émis directement en allant en direction d'au moins une porte du véhicule utilitaire.

2. Système intégré et combiné de fonctionnement de portes suivant la revendication 1, **caractérisé en ce que** la au moins une autre partie du système est un système électronique de frein ou l'un de ses sous-systèmes.

3. Système intégré et combiné de fonctionnement de portes suivant la revendication 1, **caractérisé en ce que** la au moins une autre partie du système est une régulation électronique de train de roulement, une régulation de suspension de roue, une régulation de niveau (ELC) ou une régulation d'amortissement.

4. Système intégré et combiné de fonctionnement de portes suivant la revendication 1, **caractérisé en ce que** la liaison de bus multiplexe est un bus CAN.

5. Système intégré et combiné de fonctionnement de portes suivant la revendication 1, **caractérisé en ce que** la au moins une autre partie du système comporte une unité (10) électronique de commande et des fonctions de base du fonctionnement de portes pour trois portes du véhicule utilitaire.

6. Système intégré et combiné de fonctionnement de portes suivant la revendication 5, **caractérisé en ce que** des fonctions de base pour l'actionnement de portes sont intégrées en tant que l'autre partie du système dans la commande d'une régulation électronique de train de roulement, d'une régulation de suspension de roue, d'une régulation de niveau (ELC) ou d'une régulation d'amortissement, il est prévu exactement une unité (10) électronique de commande pour la régulation électronique de train de roulement, la régulation de suspension de roue, la régulation de niveau (ELC) ou la régulation d'amortissement et les fonctions de base du fonctionnement de portes, et l'unité (2) électronique centrale de commande est disposée de manière à mettre à disposition les fonctions du système de fonctionnement de portes, qui ne sont pas intégrées à l'unité (10) électronique de commande de la régulation électronique de train de roulement, de la régulation de suspension de roue, de la régulation de niveau (ELC) ou de la régulation d'amortissement.

7. Système intégré et combiné de fonctionnement de portes suivant la revendication 1, **caractérisé en ce que** la au moins une autre partie de système comporte une unité (10) électronique de commande et des fonctions de base du fonctionnement de portes pour deux portes du véhicule utilitaire.

8. Système intégré et combiné de fonctionnement de portes suivant la revendication 7, **caractérisé en ce que** des fonctions de base pour l'actionnement de portes dans la commande d'une régulation électronique de train de roulement, d'une régulation de suspension de roue, d'une régulation de niveau (ELC) ou d'une régulation d'amortissement sont intégrées comme l'autre partie du système, exactement une unité (10) électronique de commande est prévue pour la régulation électronique de train de roulement, la régulation de suspension de roue, la régulation de niveau (ELC) ou la régulation d'amortissement et les fonctions de base du fonctionnement de portes et l'unité (2) électronique centrale de commande est disposée de manière à mettre à disposition les fonctions du système de fonctionnement de portes qui ne sont pas intégrées dans la commande de la régulation électronique de train de roulement, de la régulation de suspension de roue, de la régulation de niveau (ELC) ou de la régulation d'amortissement, l'unité (2) électronique centrale de commande et la exactement une unité (10) électronique de commande étant reliées entre elles de manière à ce que des fonctions d'une unité (2, 10) de commande puissent être effectuées par l'autre unité (2, 10) de commande et être mises à disposition à des connexions libres de respectivement l'autre unité (2, 10) de commande.

9. Système intégré et combiné de fonctionnement de portes suivant la revendication 1, **caractérisé en ce que** la au moins une autre partie du système comporte au moins deux unités (10a, 10b) électroniques de commande.

10. Système intégré et combiné de fonctionnement de portes suivant la revendication 9, **caractérisé en ce que** toutes les fonctions pour l'actionnement de portes sont intégrées dans la commande de la régulation électronique de train de roulement, de la régulation de suspension de roue, de la régulation de niveau (ELC) ou de la régulation d'amortissement sous la forme de l'autre partie du système, le véhicule utilitaire a trois portes (4, 6, 8), une unité (10a) électronique de commande est prévue pour deux des trois portes (4, 6) et une unité (10b) électronique de commande est prévue pour la troisième des trois portes et l'unité (2) électronique centrale est disposée de manière à mettre à disposition les fonctions du système de fonctionnement de portes, qui ne sont pas intégrées dans les au moins deux unités (10a, 10b) électroniques de commande de la régulation électronique de train de roulement, de la régulation de suspension de roue, de la régulation de niveau (ELC) ou de la régulation d'amortissement.

11. Système intégré et combiné de fonctionnement de portes suivant la revendication 9, **caractérisé en ce que** toutes les fonctions pour l'actionnement de portes sont intégrées dans la commande de la régulation électronique de train de roulement, de la régulation de suspension de roue, de la régulation de niveau (ELC) ou de la régulation d'amortissement sous la forme de l'autre partie du système, le véhicule utilitaire a trois portes (4, 6, 8) et il est prévu exactement deux unités (10a, 10b) électroniques de commande réparties pour les trois portes (4, 6, 8) et l'unité (2) électronique centrale de commande est disposée de manière à mettre à disposition les fonctions du système de fonctionnement de portes qui ne sont pas intégrées dans les exactement deux unités (10a, 10b) électroniques de commande de la régulation électronique de train de roulement, de la régulation de suspension de roue, de la régulation de niveau (ELC) ou de la régulation d'amortissement.

12. Système intégré et combiné de fonctionnement de portes suivant la revendication 1, **caractérisé en ce que** la au moins une autre partie du système comporte une première unité (12a) électronique de commande, qui est conçue en tant qu'unité de commande principale et qui est associée à une porte de montée du véhicule utilitaire, et au moins une deuxième unité (14a, 14b) électronique de commande, qui dépend de la première unité (12a) électronique de commande, qui est conçue en tant qu'unité de commande secondaire et qui est associée à une porte de descente du véhicule utilitaire.

13. Système intégré et combiné de fonctionnement de portes suivant la revendication 12, **caractérisé en ce que** toutes les fonctions pour l'actionnement de portes sont intégrées dans la commande de la régulation électronique de train de roulement, de la régulation de suspension de roue, de la régulation de niveau (ELC) ou de la régulation d'amortissement sous la forme de l'autre partie du système, exactement une première unité (12a) électronique de commande forme l'unité de commande principale et est prévue pour la régulation électronique de train de roulement, la régulation de suspension de roue, la régulation de niveau (ELC) ou la régulation d'amortissement et/ou le fonctionnement de portes et à chacune des portes de descente du véhicule utilitaire est associée exactement une deuxième unité (14a, 14b) électronique de commande en tant qu'unité de commande secondaire dépendant de l'unité de commande principale.

14. Système intégré et combiné de fonctionnement de portes suivant la revendication 1, **caractérisé en ce que** la au moins une autre partie du système comporte une première unité (12a) électronique de commande conçue sous la forme d'une unité de commande principale et associée à une porte de montée du véhicule utilitaire et au moins une deuxième unité (14a, 14b) électronique de commande, qui dépend de la première unité (12a) électronique de commande, qui est conçue sous la forme d'une unité de commande secondaire et qui est associée à une porte de descente du véhicule utilitaire, et une soupape de commande de portes à fonctions de commande de portes intégrées.

15. Système intégré et combiné de fonctionnement de portes suivant l'une des revendications précédentes, **caractérisé en ce que** les signaux d'entrée de commande et les signaux de sortie de commande concernant la première partie de fonctions de la commande du fonctionnement de portes contiennent des signaux pour un signal d'indicateur de descente, un signal d'urgence, une lampe indicatrice clignotante et/ou un sommateur.

16. Système intégré et combiné de fonctionnement de portes suivant l'une des revendications précédentes, **caractérisé en ce que** les signaux d'entrée de commande et les signaux de sortie de commande concernant la deuxième partie de fonctions du dispositif de fonctionnement de portes comportent des signaux d'indication et/ou des signaux d'état de la position ouverte d'une porte, de la position fermée d'une porte, d'une ouverture d'urgence d'une porte, d'un état arrêté du véhicule utilitaire, d'un état de stationnement du véhicule utilitaire et/ou d'un état en marche du véhicule utilitaire.

17. Système intégré et combiné de fonctionnement de portes suivant la revendication 7, 9 ou 12, **caractérisé en ce qu'**au moins une unité (10; 10a, 10b; 12a, 14a, 14b) électronique de commande de l'autre partie du système est reliée pour une communication à l'unité (2) électronique centrale de commande et forme une extension de connexion sortie/entrée pour l'unité (2) électronique centrale de commande.

18. Système intégré et combiné de fonctionnement de portes suivant la revendication 12, **caractérisé en ce que** la première unité (12) électronique de commande conçue sous la forme de l'unité de commande principale et la au moins une deuxième unité électronique de commande conçue sous la forme d'une unité de commande secondaire sont reliées pour une communication à l'unité (2) électronique centrale de commande et forment chacune une extension de connexion sortie/entrée pour l'unité (2) électronique centrale de commande.

19. Système intégré et combiné de fonctionnement de portes suivant l'une des revendications précédentes, comprenant un système de contrôle de passagers et/ou un système de comptage de passagers.

20. Système intégré et combiné de fonctionnement de portes suivant la revendication 19, **caractérisé en ce que** le système de contrôle de passagers est couplé à une application mobile de manière à ce qu'un appareil de communication mobile d'un passager détecte une information de localisation et/ou de suivi de la position du véhicule utilitaire et la transmette à un dispositif central de traitement de données ou reçoive du dispositif central de traitement de données une information de ce genre mise à disposition par un appareil mobile d'un autre passager.

21. Système intégré et combiné de fonctionnement de portes suivant la revendication 19, **caractérisé en ce que** le système de contrôle de passagers en soi intégré comporte un système électronique de billets, qui, pour le paiement de billets, est couplé à une application mobile sur un appareil de communication mobile d'un passager.
